**Europäisches Patentamt**

**European Patent Office**

**Office européen des brevets**

(11) Veröffentlichungsnummer: **0 120 102**
**A1**

(12) # EUROPÄISCHE PATENTANMELDUNG

(21) Anmeldenummer: **83102881.6**

(22) Anmeldetag: **23.03.83**

(51) Int. Cl.³: **G 01 K 7/20**

(43) Veröffentlichungstag der Anmeldung:
**03.10.84** Patentblatt **84/40**

(84) Benannte Vertragsstaaten:
**DE**

(71) Anmelder: **Firma Carl Zeiss**

**D-7920 Heidenheim (Brenz)(DE)**

(72) Erfinder: **Aubele, Karl-Eugen, Dipl.-Ing.**
**Brechhülbstrasse 4**
**D-7921 Gussenstadt(DE)**

(54) **Temperaturmesseinrichtung.**

(57) Die Meßeinrichtung besteht aus dem Meßverstärker (4), an den neben den Meßwiderständen ($R_M$) zwei Referenzwiderstände ($R_1$, $R_2$) über Multiplexer (3) angeschlossen sind, sowie einem dem Meßverstärker (4) nachgeschalteten Steuerrechner (6), der den Multiplexer (3) steuert und somit nacheinander die Meßwiderstände und Referenzwiderstände bei jedem Meßzyklus mit dem Meßverstärker (4) verbindet.

Die von einer Konstantstromquelle (1) an den Widerständen erzeugten Spannungsabfälle werden nach Verstärkung im Meßverstärker (4) zur Ermittlung der Meßtemperatur im Rechner (6) weiterverarbeitet, wobei der Rechner (6) die Differenz der Spannungen eines Meßwiderstandes ($R_M$) und eines Referenzwiderstandes ($R_1$) durch die Differenz der Spannungen zweier Referenzwiderstände ($R_2$ und $R_1$) dividiert. Durch diese Maßnahme ist das Meßergebnis unabhängig vom Betriebszustand des Meßverstärkers (4).

EP 0 120 102 A1

./...

Fig.1

0120102

## Temperturmeßeinrichtung

In vielen Bereichen der Technik ist es nötig, Temperaturen hochpräzise, d.h. mit einer Genauigkeit von einem 1/10° oder besser zu bestimmen. Als Beispiel sei die interferometrische Längenmessung genannt, bei der Abmessungen oder Verschiebungen eines Maschinenteils mit einer Genauigkeit in der Größenordnung eines Bruchteils der Wellenlänge des verwendeten Lichtes gemessen werden. Hier ist u.a. die Temperaturabhängigkeit der Brechzahl des Mediums im Meßstrahlengang des Interferometers und die thermische Längenausdehnung des zu vermessenden Körpers zu berücksichtigen. Beide Effekte verlangen eine Erfassung der Temperatur mit der obenangegebenen Genauigkeit von ca. 1/10° C oder besser.

Übliche Temperaturmeßgeräte sind dieser Anforderung nicht gewachsen, insbesondere wenn zusätzlich auch auf eine gute Langzeitstabilität bei der Messung Wert gelegt wird. Als hochgenaue Temperaturmeßgeräte werden daher häufig Platin-Widerstandsthermometer verwendet. Allerdings besitzt Platin nur einen ziemlich kleinen Temperaturkoeffizienten seines elektrischen Widerstandes, so daß es relativ schwierig ist, den benötigten Meßverstärker für die auftretenden geringen Spannungsänderungen und die Stromquelle zur Versorgung des Meßwiderstandes hinsichtlich von Temperaturdriften genügend stabil auszulegen.

Für diese Meßverstärker werden daher in der Regel ausgesuchte Bauelemente verwendet, die in Spezialschaltungen so miteinander kombiniert werden, daß sich die Driften einzelner Bauteile gerade gegenseitig kompensieren. Ein derartiges Widerstandsthermometer ist z.B. in "Technisches Messen ATM," 48. Jahrgang 1981, Heft 4, Seite 127 beschrieben. Bei der Inbetriebnahme dieses bekannten Gerätes sind zeitintensive Abgleicharbeiten im Meßverstärker nötig. Außerdem ist die Schaltung so ausgelegt, daß sie die Unlinearität des verwendeten Meßwiderstandes in einem bestimmten Temperaturbereich kompensiert. Ein Wechsel des Meßfühlers oder eine Änderung des Meßbereichs wäre daher mit einem Eingriff in die Schaltung verbunden.

Aus "Technisches Messen ATM" 1978, Heft 3, Seite 89 ist ein Platin-Widerstandsthermometer nach dem Oberbegriff dieser Anmeldung bekannt.

0120102

Diese Temperaturmeßeinrichtung enthält neben dem eigentlichen temperaturabhängigen Meßwiderstand und einen Referenzwiderstand eine Steuereinheit, die bei jeder Messung zyklisch den Meß- und den Referenzwiderstand mit einer Konstantstromquelle verbindet und die Differenz der nacheinander an den beiden Widerständen gemessenen Spannungsabfälle als Maß für die Temperatur des Meßwiderstandes weiterverarbeitet. Die Steuereinheit enthält darüberhinaus einen Kleinrechner, der den nichtlinearen Zusammenhang zwischen der gemessenen Spannung und der zu messenden Temperatur im Ergebnis berücksichtigt.

In dieser Schaltung fällt der Einfluß einiger Größen wie z.B. der Offsetspannung des Verstärkers auf die Meßgenauigkeit heraus. Als Fehlereinflüsse bleiben jedoch Änderungen der Gesamtverstärkung V des Meßverstärkers aufgrund z.B. thermischer Drift der verwendeten Operationsverstärker sowie Änderungen des Stroms I durch den Meß- und Referenzwiderstand aufgrund eines Drifts in der Konstantstromquelle gewichtet mit der Ablage des Meßwiderstands $R_M$ vom Referenzwiderstand $R_1$ erhalten. Daneben bildet natürlich auch die mangelnde Temperaturstabilität des Referenzwiderstandes selbst eine Fehlerquelle. Darstellen läßt sich die Abhängigkeit des Meßfehlers von den genannten Größen durch die Gleichung

$$\Delta U = (R_M - R_1) \cdot (V \cdot \Delta I + I \cdot \Delta V) + I \cdot V \cdot \Delta R_1 \qquad (1)$$

wobei $\Delta U$ der Fehler der als Maß für die Temperatur geltenden Differenz der Spannungen $U_M$ am Meßwiderstand und $U_1$ am Referenzwiderstand ist.

Der Aufbau der letztgenannten Temperaturmeßeinrichtung erfordert also ebenfalls Sorgfalt bei der Auswahl der Bauelemente, wenn eine extrem hohe Meßgenauigkeit erzielt werden soll. Außerdem ist bei der Inbetriebnahme der Meßeinrichtung eine Kalibrierung erforderlich, da der Konstantstrom I und der Verstärkungsfaktor V in das Meßergebnis eingehen.

Es ist die Aufgabe der vorliegenden Erfindung eine hochgenaue Temperaturmeßeinrichtung zu schaffen, die keine Abgleicharbeiten erfordert und dennoch die Verwendung weitgehend unspezifizierter Bauteile zuläßt.

Ausgehend von einer Temperaturmeßeinrichtung nach dem Oberbegriff des Hauptanspruches wird diese Aufgabe gemäß den im Kennzeichen des Hauptanspruches angegebenen Maßnahmen dadurch gelöst, daß mindestens ein weiterer Referenzwiderstand vorgesehen ist, dessen Signal ebenfalls bei jedem Meßzyklus der Steuereinheit zuführbar ist, und daß die Steuereinheit einen Rechner enthält, in dem die Differenz der Signale des Meßwiderstandes und eines Referenzwiderstandes durch die Differenz der Signale zweier Referenzwiderstände dividiert wird.

Mißt man bei jedem Meßzyklus die Differenz der Spannungen $U_1$ und $U_2$ an zwei Referenzwiderständen $R_1$ und $R_2$, dann gehen in diesen Wert die Gesamtverstärkung V und der Strom I durch die Widerstände als Faktor ebenso ein wie in die Differenz der Spannung $U_M$ und $U_1$ am Meßwiderstand $R_M$ und einem Referenzwiderstand z.B. $R_1$. Bei der Bildung des Quotienten

$$\frac{U_M - U_1}{U_2 - U_1}$$

fällt daher der Faktor I $\cdot$ V heraus. Dieser Quotient ist daher ein von Strom und Verstärkungsfaktor unabhängiges Maß für die Temperatur des Meßwiderstandes $R_M$.

Bei einem Aufbau gemäß der vorliegenden Erfindung können also für den Meßverstärker und die Konstantstromquelle preiswerte, unspezifierte Bauteile verwendet werden. Lediglich die Referenzwiderstände sind als temperaturstabile, nicht alternde Typen auszubilden.

Solche Referenzwiderstände mit einem Temperaturkoeffizienten kleiner $5 \cdot 10^{-6} \, ^\circ C^{-1}$ sind ohne weiteres erhältlich und werden in verschiedenen Werten mit einer Toleranz von 0,01$\Omega$ angeboten. Durch die Referenzwiderstände werden zwei Referenztemperaturen festgelegt, die sich durch Multiplikation der Widerstandswerte mit der Kennlinie des Meßwiderstandes ergeben und den Meßbereich definieren. Der Meßwiderstand ist in ähnlich genauer Spezifikation erhältlich. Somit findet bei jedem Meßzyklus eine permanente Rekalibrierung des Meßverstärkers auf die den Referenzwiderständen zugeordneten Temperaturwerte statt, so daß eine separate Kalibrierung der Meßeinrichtung im eigentlichen Sinne vor der Inbetriebnahme nicht erforderlich ist.

Insbesondere, wenn ein relativ großer Temperaturmeßbereich erfaßt werden soll kann es sich als vorteilhaft erweisen die Zahl der Referenzwiderstände über 2 hinaus zu erhöhen und so zu dimensionieren, daß der gesamte Meßbereich in z.B. gleich große Teilbereiche aufgeteilt ist. Ein Meßzyklus umfaßt dann die Messung der Spannungen am Meßwiderstand und an den beiden verglichen mit dem Meßwiderstand nächst größeren und nächst kleineren Referenzwiderstand. Mit einer solchen Teilung des Meßbereiches läßt sich der Einfluß von Störspannung, Rauschen und Unlinearitäten der Kennlinie des Meßverstärkers auf das Meßergebnis reduzieren.

Es ist außerdem zweckmäßig vor dem Rechenvorgang zur Temperaturmessung über die Spannungsmeßwerte mehrerer Meßwerte zu mitteln, um zu einer höheren Meßgenauigkeit zu gelangen.

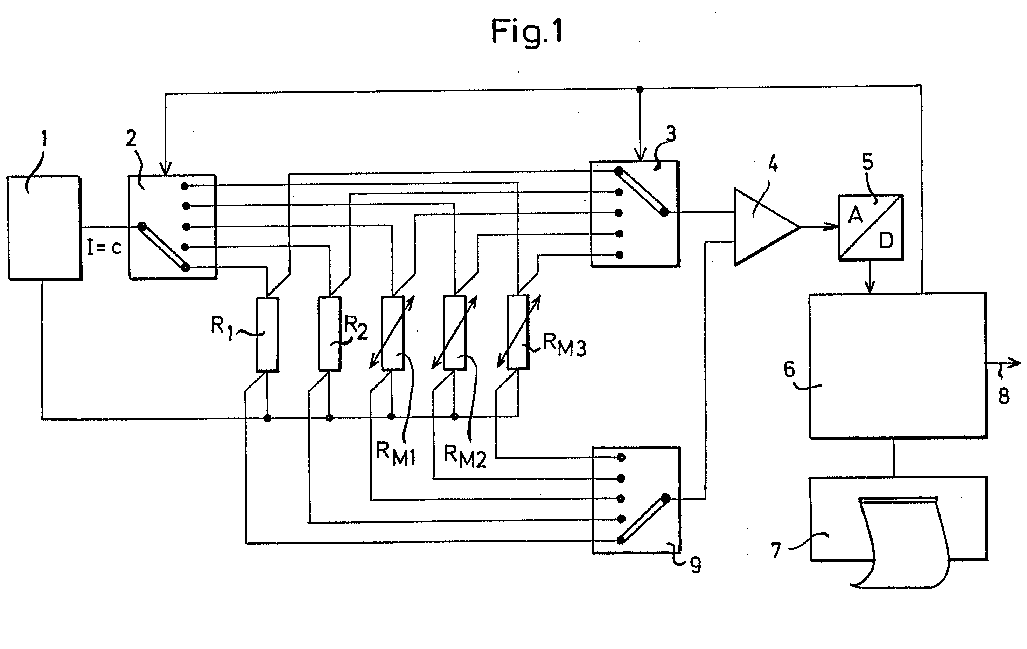

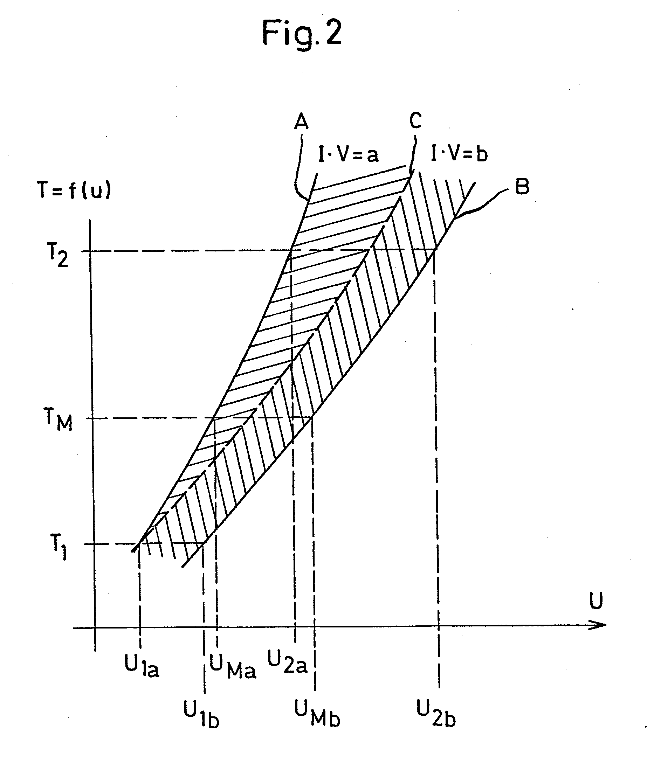

Weitere vorteilhafte Ausgestaltungen der Erfindung finden sich in den Unteransprüchen und werden in der nachfolgenden Beschreibung der Fig. 1 und 2 der beigefügten Zeichnungen erläutert. Dabei zeigt

Fig. 1   ein Blockschaltbild eines Ausführungsbeispiels der Erfindung;

Fig. 2   ein Diagramm, das die funktionale Abhängigkeit der zu bestimmenden Temperaturen von den gemessenen Spannungen zeigt.

Die Temperaturmeßeinrichtung, deren Blockschaltbild in Fig. 1 dargestellt ist, enthält eine Konstantstromquelle 1, mit der über einen Multiplexer 2 nacheinander die Meßwiderstände $R_{M1}$, $R_{M2}$ und $R_{M3}$ und zwei Referenzwiderstände $R_1$ und $R_2$ verbunden werden. Der Multiplexer 2 ist vereinfacht als mechanischer Schalter dargestellt, tatsächlich handelt es sich jedoch um ein integriertes elektronisches Bauteil, beispielsweise kann ein Analogmultiplexer mit der Bezeichnung MN 4708 der Fa. Analogic verwendet werden.

Je ein Ende der Widerstände $R_1$ und $R_2$ und $R_{M1}$-$R_{M3}$ ist über eine separate Meßleitung mit je einem weiteren Multiplexer 3 bzw. 9 verbunden. Die Ausgänge der Multiplexer 3 und 9 sind einem Verstärker 4 zur Verstärkung der an den Widerständen jeweils abfallenden Spannung zugeführt.

- 5 -

Auf den Verstärker 4 folgt ein Digital-Analogwandler 5. Dem darauf folgenden Steuerrechner 6 liegen die Spannungen der jeweils von der Konstantstromquelle 1 beaufschlagten Widerstände als digital verarbeitbare Information vor.

Der Steuerrechner 6 enthält einen Mikroprozessor, von dem die Multiplexer 2 und 3 angesteuert werden, und der synchron dazu die den einzelnen Widerständen zugehörigen digitalen Spannungswerte abspeichert. Als Meßwiderstand $R_M$ ist ein Platinwiderstand mit der Bezeichnung PT 100 gewählt, dessen Widerstand in Abhängigkeit von der Temperatur T durch die Funktion

$$R_M = R_o\ (1 + \mathcal{L}T + \beta T^2)\tag{2}$$

beschrieben werden kann. $R_o$ beträgt $100\Omega$ und $\mathcal{L}$ beträgt $3,9 \cdot 10^{-3} \text{°C}^{-1}$. Soll der Meßbereich der Temperaturmeßeinrichtung sich beispielsweise zwischen 0°C und 100°C erstrecken, so sind die Widerstände $R_1$ und $R_2$ so auszuwählen, daß sie dem elektrischen Widerstand des Meßwiderstandes $R_M$ an den Grenzen des Meßbereiches etwa entsprechen, d.h. $R_1$ beträgt etwa $100\Omega$ und $R_2$ beträgt etwa $140\Omega$ in dem hier gewählten Beispiel. Jedem dieser Widerstandswerte $R_1$ und $R_2$ entspricht eine Referenztemperatur $T_1$ und $T_2$, die sich unter Berücksichtigung des Temperaturkoeffizienten des Meßwiderstandes und unter Zugrundelegung der exakten Werte der Referenzwiderstände hochgenau ermitteln läßt. Diese Referenztemperaturen gehen in die vom Mikroprozessor des Steuerteils 6 bei jedem Meßzyklus durchgeführte Berechnung der Temperaturen $T_M$ am Meßwiderstand $R_M$ ein.

Nachfolgend wird der dort ablaufende Rechenvorgang näher erläutert: Ohne Berücksichtigung des nichtlinearen Anteils in Gleichung (2) ist die Differenz zwischen der am Meßwiderstand abfallenden Spannung $U_M$ und der am Referenzwiderstand $R_1$ abfallenden Spannung $U_1$ proportional der vorliegenden Differenz zwischen der Meßtemperatur $T_M$ und der oben definierten Referenztemperatur $T_1$:

$$m \cdot (U_M - U_1) = (T_M - T_1).\tag{3}$$

Der Proportionalitätsfaktor m ist bestimmt durch die gemessenen Span-

nungen an den Referenzwiderständen $R_1$ und $R_2$ und ergibt sich zu

$$m = \frac{T_2 - T_1}{U_2 - U_1} \qquad (4)$$

Der Mikroprozessor des Steuerteils 6 berechnet also für jede der drei Meßstellen aus den Meßwerten $U_1$, $U_2$ und $U_M$, die ihm der Digital-Analogwandler 5 liefert, und den durch die Referenzwiderstände festgelegten Konstanten $T_2$ und $T_1$ gemäß den Gleichungen (3) und (4) eine Temperatur $T_M$ am Meßwiderstand in linearer Näherung. Anschließend wird zur Ermittlung der exakten Temperatur $T_{Mq}$ ein aus Gleichung (2) abgeleitetes Korrekturglied hinzugefügt, so daß sich ergibt:

$$T_{Mq} = T_M + c \cdot T_M^2 \qquad (5)$$

Die zur Berechnung von $T_{Mq}$ verwendete Konstante c läßt sich mit einer Ausgleichsrechnung aus den in DIN 43760 angegebenen Stützpunkten der R-T Kennlinie des Platinwiderstandes vorab bestimmen.

An den Steuerrechner 6 ist ein Drucker 7 zur Ausgabe der Meßwerte angeschlossen. Eine weitere Datenleitung 8 dient zur Kommunikation des Rechners 8 mit Zusatzgeräten, beispielsweise mit einem Interferometer, dessen Temperatur im Meßstrahlengang von den Widerständen $R_{M1}$-$R_{M3}$ gemessen wird und als digitale Information zur Korrektur der interferometrischen Längenmessung herangezogen wird.

Natürlich kann anstelle des mikroprozessorgesteuerten Rechners 6 auch ein aus diskreten Bauelementen aufgebauter Rechner verwendet werden, dessen Aufbau den Fachmann vor keinerlei Schwierigkeiten stellt. Da nur wenige unkomplizierte Rechenoperationen durchzuführen sind, hält sich der dazu nötige Bauteileaufwand in Grenzen.

Abschließend wird die Verbesserung der mit der Erfindung erzielbaren Genauigkeit der Temperaturmessung verglichen mit dem Stand der Technik nochmals anhand der Graphik in Fig. 2 erläutert.

Dort ist die Meßtemperatur T gegen die vom Meßverstärker abgegebene Spannung U aufgetragen. Der nichtlineare funktionale Zusammenhang zwischen diesen beiden Größen wird durch Gleichung (2) beschrieben, wobei die Momentanwerte des Stroms I durch den Widerstand und der Verstärkung V als zusätzliche Parameter zu berücksichtigen sind. Die Graphen A und B geben die Funktion T = f(U) für zwei Werte I · V = a und I · V = b an, die beispielsweise infolge thermischer Drift voneinander verschieden sind. Der schraffierte Bereich zwischen den Kurven A und B repräsentiert den Fehler, der entstehen kann, wenn allein die am Meßwiderstand abfallende Spannung verstärkt und als Maß für die Temperatur verwendet wird.

Bei der aus ATM 1978, Heft 3, Seite 89 bekannten Meßeinrichtung wird die Differenz $U_M - U_1$ der Spannungen des Meßwiderstandes und eines Referenzwiderstandes als Maß für die Meßtemperatur benutzt. Dem entspricht eine Parallelverschiebung des Graphen B in Richtung auf den Graphen A, bis sie sich beide bei der durch den Referenzwiderstand definierten Temperatur $T_1$ schneiden. Der Fehlerbereich ist mit der bekannten Maßnahme auf den Bereich zwischen den Graphen A und dem mit C bezeichneten Graphen verkleinert worden und es ist ersichtlich, daß der verbleibende Fehlerbereich umso größer wird, je weiter die zu messende Temperatur $T_M$ von der Referenztemperatur $T_1$ abliegt.

Gemäß der Erfindung wird zusätzlich durch die Differenz zwischen der Spannung $U_1$ des ersten Referenzwiderstandes und der Spannung $U_2$ eines zusätzlichen zweiten Referenzwiderstandes dividiert, wodurch I·V als Parameter im Ergebnis herausfällt, so daß auch der vorgenannte Restfehler noch verschwindet.

Patentansprüche:

1. Temperaturmeßeinrichtung mit einem temperaturabhängigem Meßwiderstand ($R_M$), einem Referenzwiderstand ($R_1$), einem Meßverstärker (4) und einer Steuereinheit (6), die bei jedem Meßzyklus das Signal ($U_M$) des Meßwiderstandes mit dem Signal ($U_1$) des Referenzwiderstandes vergleicht, wobei die Differenz der beiden Signale ein Maß für die Temperatur darstellt, dadurch gekennzeichnet, daß mindestens ein weiterer Referenzwiderstand ($R_2$) vorgesehen ist, dessen Signal ($U_2$) ebenfalls bei jedem Meßzyklus der Steuereinheit (6) zuführbar ist, und daß die Steuereinheit (6) einen Rechner enthält, in dem die Differenz der Signale des Meßwiderstandes und eines Referenzwiderstandes durch die Differenz der Signale zweier Referenzwiderstände dividiert wird.

2. Temperaturmeßeinrichtung nach Anspruch 1, dadurch gekennzeichnet, daß die Meß- und Referenzwiderstände über einen von der Recheneinheit (6) steuerbaren Multiplexer (2) mit einer Konstantstromquelle (1) und mittels separater Meßleitungen über mindestens einen zweiten Multiplexer (3) mit dem Eingang eines Verstärkers (4) verbunden sind, dessen Ausgang mit dem Eingang der Recheneinheit (6) gekoppelt ist.

3. Temperaturmeßeinrichtung nach Anspruch 1-2, dadurch gekennzeichnet, daß es sich bei dem Meßwiderstand ($R_M$) um einen Platindrahtwiderstand handelt.

4. Temperaturmeßeinrichtung nach Anspruch 1-3, dadurch gekennzeichnet, daß an die Meßeinrichtung mehrere Meßwiderstände ($R_{M1}$, $R_{M2}$, $R_{M3}$) angeschlossen sind.

5. Temperaturmeßeinrichtung nach Anspruch 1-4, dadurch gekennzeichnet, daß weitere Referenzwiderstände vorgesehen sind, deren Widerstandswert so gewählt ist, daß sie dem Widerstandswert des Meßwiderstandes innerhalb des vorgesehenen Temperaturbereichs entsprechen.

- 9 -

6. Temperaturmeßeinrichtung nach Anspruch 1-5, gekennzeichnet durch ihre Verwendung zur Temperaturmessung in einem Laserinterferometer.

Fig.1

## Fig. 2

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | FR-A-2 369 568 (HEWLETT-PACKARD GmbH) <br> * Einführung; Figur 1; Seite 2, Zeile 25 - Seite 4, Zeile 6 * | 1,2 | G 01 K 7/20 |
| A | WO-A-8 203 121 (BABCOCK-BRISTOL LTD.) <br> * Einführung; Figuren 1-7; Seite 13, Zeile 3 - Seite 21, Zeile 18 * | 1,2 | |
| Y,D | TECHNISCHES MESSEN ATM, Band 45, Nr. 3, März 1978, Seiten 89-93, München, DE. <br> C.-H. FELLER: "Vielstellen-Präzisionstemperatur messschaltung mit Linearisierung für Pt100-Widerstandsthermometer" <br> * Seite 89, Absatz 1.1 - Seite 92, Absatz 4 * | 1-4 | |

RECHERCHIERTE SACHGEBIETE (Int. Cl. ³)

G 01 K 7/00
G 01 D 3/00
G 12 B 7/00

Der vorliegende Recherchenbericht wurde für alle Patentansprüche erstellt.

| Recherchenort | Abschlußdatum der Recherche | Prüfer |
|---|---|---|
| DEN HAAG | 25-11-1983 | VISSER F.P.C. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82